# EUROPÄISCHE PATENTSCHRIFT

(11) **EP 2 786 823 B1**
(45) Veröffentlichungstag und Bekanntmachung des Hinweises auf die Patenterteilung: **24.06.2015**
(21) Anmeldenummer: 14001244.4
(22) Anmeldetag: 03.04.2014
(51) Int. Cl.: B23D 63/00, B23D 63/08

(54) **Vorrichtung zum wahlweisen Schärfbearbeiten von Band- und Gattersägeblättern**
Device for optional sharpening of ribbon and gang saw blades
Dispositif d'usinage par aiguisement sélectif de lames de scie à ruban et de scie alternative

(30) Priorität: 03.04.2013 DE 102013005593
(43) Veröffentlichungstag der Anmeldung: 08.10.2014
(73) Patentinhaber: VOLLMER WERKE Maschinenfabrik GmbH, 88400 Biberach/Riss (DE)
(72) Erfinder: Hartmann, Bernd, 51377 Leverkusen (DE); Gerst, Manuel, 88400 Biberach (DE)
(74) Vertreter: Thum, Bernhard

(56) Entgegenhaltungen:
- DE-C1- 19 518 710
- DE-T2- 69 609 611
- US-A- 1 327 012
- US-A- 2 305 564
- US-A- 2 462 225
- US-A- 5 488 884

## Beschreibung

Die vorliegende Erfindung betrifft eine Vorrichtung gemäß dem Oberbegriff des Anspruchs 1 zum Schärfbearbeiten von langgestreckten Sägewerkzeugen umfassend eine Basis, welche ein langgestrecktes Maschinenbett aufweist; eine Fixiervorrichtung, die dazu ausgebildet ist, das zu bearbeitende Sägewerkzeug relativ zum Maschinenbett zu fixieren; einen Bearbeitungskopf mit einer Rotationsachse zum Antreiben eines Rotationswerkzeuges und einer Hubachse zum Höhenverstellen des Rotationswerkzeuges relativ zum Maschinenbett und ein Verfahren gemäß dem Oberbegriff des Anspruchs 15.

Derartige Vorrichtungen und Verfahren sind aus dem Stand der Technik bekannt und in den Dokumenten DE 195 18 710 C1 und DE 696 09 611 T2 beschrieben. Dabei ist der Bearbeitungskopf allgemein feststehend relativ zum Maschinenbett angeordnet. Das Rotationswerkzeug wird mittels einer zusätzlich am Bearbeitungskopf vorgesehenen Schwenkachse entsprechend eines Winkels des Verzahnungsprofils des Sägewerkzeugs eingestellt und zur Bearbeitung mittels der Hubachse in das Verzahnungsprofil eingeführt. Durch, wie nachstehend beschrieben, erzeugte Relativbewegungen wird das Rotationswerkzeug entlang der Kontur des Sägewerkzeugs geführt, was man auch als Profilschleifen oder -schärfen bezeichnet. Das Sägewerkzeug wird dabei jeweils im Bereich zwischen zwei benachbarten Zahnspitzen, also teilungs- oder lückenweise bearbeitet. Dabei erfolgt die Bearbeitung ausgehend von einem ersten Zahn entlang dessen Zahnbrust und dem Zahngrund sowie anschließend entlang des Zahnrückens und der Freifläche eines benachbarten Zahns. Die während eines Bearbeitungsvorganges vom Rotationswerkzeug bearbeitete Bearbeitungslänge entspricht also im Wesentlichen der Teilung des Verzahnungsprofils. Das Sägewerkzeug wird währenddessen oder anschließend jeweils relativ zum Rotationswerkzeug verlagert, so dass nach einem erfolgten lückenweisen Bearbeitungsvorgang ein unbearbeiteter Bereich des Sägewerkzeugs unterhalb des Rotationswerkzeugs angeordnet ist. Entsprechend erfolgt die Bearbeitung eines mehrere Zähne umfassenden Sägewerkzeugs im Stand der Technik als Abfolge aus einzelnen lückenweisen Bearbeitungsvorgängen mit einem jeweiligen Verlagerungsvorgang des Sägewerkzeugs.

Das Dokument DE 195 18 710 C1 offenbart eine Vorrichtung, bei der ein Rotationswerkzeug in Form einer Schleifscheibe mittels einer Schwenkachse entsprechend des Verlaufs einer Zahnbrust eines Sägewerkzeugs ausgerichtet wird, also entsprechend des Spanwinkels des Verzahnungsprofils. Ein Sägewerkzeug wird derart unterhalb der Schleifscheibe positioniert, dass die Zahnbrust eines Sägezahns der Schleifscheibe gegenüberliegt. Anschließend wird die Schleifscheibe mittels einer Hubachse in das Verzahnungsprofil abgesenkt, um die Zahnbrust schleifend zu bearbeiten. Weiterhin umfasst die in diesem Dokument beschriebene Vorrichtung eine Vorschubvorrichtung, welche einen Vorschubarm mit einem sich quer zur Längsrichtung des Sägewerkzeugs erstreckenden Vorschubfinger aufweist. Dieser Vorschubarm wird mittels eines Querschlittens der Vorschubvorrichtung quer zum Sägewerkzeug bewegt, so dass der Vorschubfinger in eine Zahnlücke des Sägewerkzeugs eingreift, welche benachbart zu der von der Schleifscheibe aktuell bearbeiteten Zahnlücke ist. Der Querschlitten ist mittels einer Vorschubachse verlagerbar, so dass das Sägewerkzeug nach erfolgtem Eingriff des Vorschubfingers relativ zu Maschinenbett und Rotationswerkzeug um die Strecke einer Teilung verlagerbar ist. Erreicht die Schleifscheibe nach Bearbeiten der Zahnbrust den Zahngrund, wird der Querschlitten mittels der Vorschubachse in Richtung der Schleifscheibe verlagert, so dass sich diese in entgegengesetzter Richtung relativ zur Längsrichtung des Sägewerkzeugs bewegt. Dabei werden die Bewegung der Hubachse und der Vorschubachse derart koordiniert, dass die Schleifscheibe eine vorgegebene, sich an einer Sollkontur des Verzahnungsprofils orientierende Bewegung ausführt. Nach Zurücklegen der Bearbeitungslänge wird die Schleifscheibe mittels der Hubachse aus dem Verzahnungsprofil ausgefahren. Das Sägewerkzeug wird mittels der Vorschubvorrichtung in eine Ausgangsposition für das Bearbeiten der folgenden Zahnlücke weiterverlagert. Anschließend wird der Vorschubarm mittels einer koordinierten Bewegung von Querschlitten und Vorschubachse um die Strecke einer Teilung zurückversetzt, um in der vorstehend beschriebenen Weise in eine benachbarte Zahnlücke einzugreifen.

Somit erfolgt bei dieser Vorrichtung das Bearbeiten des Sägewerkzeugs lückenweise mit einem jeweiligen Vorschub des Sägewerkzeugs längs des Maschinenbetts um die Strecke einer Teilung. Dies ist jedoch sowohl hinsichtlich der erreichbaren Bearbeitungsgenauigkeit, wie auch der Bearbeitungszeit nachteilig. Das Sägewerkzeug wird während der Bearbeitung phasenweise aktiv von der Vorschubvorrichtung verlagert. Dabei ist das Sägewerkzeug nicht relativ zum Maschinenbett fixiert, was nachteilig hinsichtlich dessen Steifigkeit gegenüber der Schleifscheibe ist. Weiterhin erfolgt der Eingriff der Vorschubvorrichtung am Sägewerkzeug an unter Umständen noch nicht bearbeiteten Abschnitten des Verzahnungsprofils. Dies bedeutet, dass die Genauigkeit der Bearbeitung einer Zahnlücke abhängig vom Zustand der benachbarten Zahnlücke ist, an dem die Vorschubvorrichtung angreift. Die Vorschubbewegung der Vorschubachse wird typischerweise als konstanter Wert vorgegeben, beispielsweise als Betrag der Zahnteilung. Weicht die Zahnlücke und insbesondere die Zahnbrust an der die Vorschubvorrichtung angreift von einer erwarteten Sollkontur des Verzahnungsprofils ab, wird das Sägewerkzeug entsprechend weiter oder weniger weit verlagert als vorgegeben. Entsprechend kann bei einer solchen Vorrichtung die Teilung entlang des Sägewerkzeugs nach dem Bearbeiten kontinuierlich variieren. Derartige Fehler treten auch bei einsetzender Abnutzung des Vorschubfingers auf und können sich über eine Vielzahl von Zähnen fortpflanzen. Weiterhin ist nach dem erfolgten Bearbeiten einer Zahnlücke auch stets eine gewisse Zeit erforderlich, um den Vorschubfinger in einer benachbarten Zahnlücke neu zu positionieren, das Sägewerkzeug freizugeben, den Vorschub durchzuführen und das Sägewerkzeug erneut zu fixieren. Dies erhöht die Bearbeitungszeit eines mehrere Zähne umfassenden Sägewerkzeugs.

Die gleichen Nachteile ergeben sich auch bei der im Dokument DE 696 09 611 T2 beschriebenen Vorrichtung. Hierbei erfolgt das Bearbeiten des unbeweglichen Sägewerkzeugs ähnlich wie vorstehend beschrieben mittels einer Schleifscheibe. Jedoch wird die Relativbewegung zwischen Schleifscheibe und Sägewerkzeug bei der Bearbeitung nicht unter Zuhilfenahme einer Vorschubvorrichtung realisiert. Stattdessen ist am Bearbeitungskopf rechtwinklig zur Hubachse eine translatorisch wirkende, sogenannte X-Achse vorgesehen. Die Bewegungen von Hubachse und X-Achse werden derart koordiniert, dass die Schleifscheibe entlang des Verzahnungsprofils des Sägewerkzeugs geführt wird. Die Bearbeitung erfolgt wiederum lückenweise, also mit einer Bearbeitungslänge entsprechend einer Teilung des Verzahnungsprofils. Weiterhin ist eine Vorschubvorrichtung auf einem separaten Schlitten vorgesehen, die in einer kombinierten schwenkenden und translatorischen Bewegung in eine zur bearbeiteten Zahnlücke benachbarten Zahnlücke eingreift, um das Sägewerkzeug relativ zur Schleifscheibe um die Strecke einer Teilung zu verlagern.

Das Dokument DE 103 51 151 B3 beschreibt ebenfalls eine Vorrichtung zum Schärfbearbeiten von Bandsägeblättern. Auch dieses Dokument beschreibt eine herkömmliche Kinematik, bei der ein Bearbeitungskopf entlang einer Hubachse Y bewegbar ist. Ferner weist die darin beschriebene Vorrichtung eine Vorschubeinrichtung auf, die eine oszillierende Verlagerung eines Vorschubfingers ermöglicht. Dadurch lässt sich das Bandsägeblatt schrittweise in Richtung seiner Längserstreckung entlang einer Vorschubachse X verlagern. Gegebenenfalls kann auch eine gleichzeitige Bewegung der Hubachse Y und der Vorschubachse X erfolgen.

Das Dokument US 6,631,658 B2 beschreibt eine weitere Vorrichtung zum Schärfbearbeiten von Bandsägeblättern. Die Besonderheit dieser Vorrichtung liegt darin, dass ein Messtaster mit einer Vorschubeinheit gekoppelt ist, um eine exakte Positionierung eines zu schleifenden Zahnes auch bei einer variablen Zahlenteilung oder bei Teilungsfehlern zu gewährleisten. Dieser Stand der Technik sieht vor, dass eine Vorschubbewegung immer nur zahnweise erfolgt.

Die vorstehend beschriebenen Nachteile des Standes der Technik sind besonders dann kritisch, wenn derartige Vorrichtungen zum Bearbeiten von Bandsägeblättern verwendet werden. Diese weisen aufgrund ihrer Länge gegenüber Gattersägeblättern in der Regel eine deutlich größere Anzahl an Sägezähnen auf, so dass sich die vorstehend geschilderten Beeinträchtigungen der Genauigkeit und Bearbeitungszeit entsprechend summieren.

Es ist daher Aufgabe der vorliegenden Erfindung, eine Vorrichtung bereitzustellen, mit der langgestreckte Sägewerkzeuge mit einer hohen Genauigkeit und geringem Zeitaufwand schärfend bearbeitet werden können.

Diese Aufgabe wird durch eine Vorrichtung gemäß Anspruch 1 gelöst, bei der der Bearbeitungskopf mittels einer linearen Bewegungsachse längs des Maschinenbetts derart verlagerbar ist, dass ein fixiertes Sägewerkzeug entlang einer vorbestimmten, eine Mehrzahl von Zähnen umfassenden Bearbeitungslänge bearbeitbar ist, wobei eine Vorschubvorrichtung vorgesehen ist, die dazu ausgebildet ist, das Sägewerkzeug wahlweise um die Strecke eines einzelnen Zahns oder um die Strecke der vorbestimmten, eine Mehrzahl von Zähnen umfassenden Bearbeitungslänge längs des Maschinenbetts zu verlagern.

Das Vorsehen einer derartigen linearen Bewegungsachse ermöglicht es, dass Sägewerkzeuge nicht mehr ausschließlich lückenweise bearbeitbar sind mit jeweils einer anschließenden Verlagerung des Sägewerkzeugs. Stattdessen können vollständige Abschnitte des Verzahnungsprofils, die eine Mehrzahl von Zähnen umfassen, innerhalb eines Bearbeitungsvorganges bearbeitet werden. Bei einer entsprechenden Dimensionierung von Maschinenbett und linearer Bewegungsachse ist es beim Bearbeiten von Gattersägeblättern dabei sogar möglich, Sägewerkzeuge ohne eine einzige Verlagerungs- bzw. Vorschubbewegung vollständig zu bearbeiten.

Erstreckt sich ein Sägewerkzeug über den Bewegungsraum der linearen Bewegungsachse hinaus, so muss auch weiterhin eine Verlagerung des Sägewerkzeugs relativ zum Maschinenbett erfolgen. Die erfindungsgemäße Vorschubvorrichtung bietet dabei den Vorteil, dass das Sägewerkzeug um eine Strecke verlagerbar ist, die größer als nur die Strecke einer Teilung ist, und insbesondere um eine Strecke entsprechend der Bearbeitungslänge verlagerbar ist. Dadurch ist es möglich, dass Sägewerkzeuge in Abhängigkeit der Bearbeitungslänge mit einer geringstmöglichen Anzahl an Verlagerungsvorgängen zeitsparend zu bearbeiten. Dies ist insbesondere bei Bandsägeblättern oder Werkzeugrohlingen in Form von Coils oder Bändern vorteilhaft, die aufgrund ihrer geschlossenen kreisförmigen Form und ihrer Länge nur abschnittsweise bearbeitbar sind und daher in jedem Fall relativ zum Maschinenbett verlagert werden müssen.

Sowohl bei einem Bearbeiten von Gattersägeblätter wie auch von Bandsägeblättern können also die durch Verlagerungsvorgänge des Sägewerkzeugs verursachten Beeinträchtigungen der Genauigkeit und der Bearbeitungszeit mittels der erfindungsgemäßen Vorrichtung reduziert werden. Die sich einstellende Teilung des Verzahnungsprofils ist weiterhin zumindest abschnittsweise konstant, wobei die Abschnitte jeweils eine Anzahl von Zähnen entsprechend der vorgegebenen Bearbeitungslänge umfassen.

Während dem Bearbeiten des Sägewerkzeugs können die Bewegungen von Hubachse und linearer Bewegungsachse derart koordiniert werden, dass das Rotationswerkzeug in bekannter Weise konturgenau entlang des Verzahnungsprofils geführt wird. Der Begriff "lineare Bewegungsachse" bezieht sich hierbei auf die von dieser Achse ausgeführte lineare Bewegung. Es versteht sich, dass diese Bewegung auf verschiedene und an sich bekannte Weise erreicht werden kann, beispielsweise mittels Zahnstangen, Gewindestangen, Linearantrieben oder dergleichen. Unter dem Begriff "Rotationswerkzeug" sind sämtliche zur Rotation angetriebene und zum Schärfen von Sägewerkzeugen geeignete Werkzeuge zu verstehen, insbesondere aber Schleifscheiben und Erodierwerkzeuge. Alternativ kann auch ein Erodierdraht verwendet werden. Der Begriff "Sägewerkzeug" bezieht sich insbesondere auch auf unverzahnte oder vorverzahnte Rohlinge, die bei einem Bearbeiten durch die erfindungsgemäße Vorrichtung mit einer Erst- bzw. Endverzahnung versehen werden. Ebenso ist das Bearbeiten von endverzahnten Sägewerkzeugen vorgesehen, die bspw. infolge einer betriebsbedingten Abnutzung nachzubearbeiten sind.

Wie nachstehend noch ausführlicher erläutert werden wird, erfolgt das Bearbeiten eines Sägewerkzeugs mit der erfindungsgemäßen Vorrichtung derart, dass das Sägewerkzeug innerhalb der Vorrichtung zunächst in einer vorbestimmten Position fixiert wird. Unter Koordination der Bewegungen von linearer Bewegungsachse und Hubachse wird das Rotationswerkzeug entlang des Verzahnungsprofils des Sägewerkzeugs geführt. Nach Zurücklegen einer vorgegebenen Bearbeitungslänge wird das Rotationswerkzeug aus dem Verzahnungsprofil ausgefahren und der Bearbeitungskopf wird mittels der linearen Bewegungsachse in seine Ausgangsstellung zurückbewegt. Weiterhin wird das Sägewerkzeug um den Betrag der vorgegebenen Bearbeitungslänge relativ zum Maschinenbett und somit auch relativ zur Ausgangsstellung des Bearbeitungskopfes verlagert. Diese Schritte können so oft wiederholt werden, bis das Sägewerkzeug entlang dessen gesamter Länge bearbeitet ist. Je größer dabei die Bearbeitungslänge gewählt ist, desto geringer ist die Anzahl der notwendigen Verlagerungen des Sägewerkzeugs durch die Vorschubvorrichtung und desto geringer sind die aus dem Stand der Technik bekannten Beeinträchtigungen der Genauigkeit und der Bearbeitungszeit.

Es versteht sich, dass die Bewegungen von linearer Bewegungsachse und Vorschubvorrichtung auch auf andere Weise koordiniert werden können. So ist es beispielsweise nach wie vor möglich, mit der erfindungsgemäßen Vorrichtung ein Sägewerkzeug zahn- oder lückenweise zu bearbeiten und entsprechend jeweils um die Strecke einer Teilung zu verlagern.

Eine Weiterbildung der Erfindung sieht vor, dass die Vorschubvorrichtung längs des Maschinenbetts wahlweise um die Strecke eines einzelnen Zahns oder um die Strecke der vorbestimmten, eine Mehrzahl von Zähnen umfassenden Bearbeitungslänge verlagerbar ist. Eine Verlagerung der Vorschubvorrichtung an sich bedeutet, dass die Vorschubvorrichtung während des Verlagerungsvorgangs relativ zum Sägewerkzeug konstant positioniert sein kann. Dies ermöglicht, dass etwaige Vorschuborgane, mit denen die Vorschubvorrichtung mit dem Sägewerkzeug in Kontakt tritt, bauraumsparend konstruiert werden können.

Ferner kann erfindungsgemäß vorgesehen sein, dass die Vorschubvorrichtung mittels einer separat vorgesehenen Bewegungsachse längs des Maschinenbetts verlagerbar ist. Das Vorsehen einer separaten Bewegungsachse ermöglicht es, dass die Vorschubvorrichtung gezielt und unabhängig ansteuerbar ist. Außerdem kann eine derartige Bewegungsachse auch an besondere Anforderungen der Vorschubvorrichtung speziell angepasst werden.

Alternativ dazu sieht eine Weiterbildung der Erfindung vor, dass die Vorschubvorrichtung am Bearbeitungskopf angeordnet ist, so dass sie gemeinsam mit diesem mittels der linearen Bewegungsachse verlagerbar ist. Hierdurch wird das Vorsehen einer separaten Bewegungsachse für die Vorschubvorrichtung hinfällig. Dies bedeutet, dass sowohl Kosten als auch Bauraum gespart werden können und die Einleitung von Vibrationen durch mehrere, unabhängig voneinander wirkende Bewegungsachsen reduziert werden kann. Weiterhin kann, wie nachstehend beschrieben, mittels einer derartigen Weiterbildung der Erfindung das Bewegen des Bearbeitungskopfes in seine Ausgangsstellung nach Zurücklegen der vorgegebenen Bearbeitungslänge mit dem Verlagern des Sägewerkzeugs unmittelbar gekoppelt werden. Dieses gekoppelte Ausführen der Bewegungen von Bearbeitungskopf und Vorschubvorrichtung verkürzt die Bearbeitungszeit des Sägewerkzeugs.

Eine Weiterbildung der Erfindung sieht vor, dass die Vorschubvorrichtung unter Reibschluss am Sägewerkzeug angreift, um dieses zu verlagern. Der Reibschluss kann beispielsweise durch Herstellen einer Klemmverbindung zwischen Vorschubvorrichtung und Sägewerkzeug erreicht werden oder durch Einschließen des Sägewerkzeugs zwischen einem Walzenpaar. Derartige Lösungen ermöglichen es, dass die Vorschubvorrichtung unabhängig vom Verzahnungsprofil am Sägewerkzeug angreifen kann. Es versteht sich, dass die Vorschubbewegung auch sensorisch erfasst werden kann, um die Genauigkeit des Verlagerungsvorganges zu verbessern.

Alternativ hierzu kann erfindungsgemäß vorgesehen sein, dass die Vorschubvorrichtung unter Formschluss am Sägewerkzeug angreift, um dieses zu verlagern. Ein derartiger Formschluss kann insbesondere durch Eingriff der Vorschubvorrichtung in das Verzahnungsprofil des Sägewerkzeugs erreicht werden. Dabei kann die Vorschubvorrichtung bevorzugt in derartige Bereiche des Verzahnungsprofils eingreifen, die geringe Fertigungstoleranzen aufweisen bzw. geringe Toleranzen infolge einer Abnutzung nach einem Betrieb des Sägewerkzeugs. Derartige geringe Toleranzen des Verzahnungsprofils mindern nachteilige Einflüsse auf den Betrag der Verlagerungsstrecke des Sägewerkzeugs und ermöglichen eine genaue Positionierung des Sägewerkzeugs relativ zum Rotationswerkzeug. Eine noch höhere Genauigkeit kann erzielt werden, wenn die Vorschubvorrichtung einen Formschluss zum Sägewerkzeug innerhalb eines von der Vorrichtung bereits bearbeiteten Bereichs des Verzahnungsprofils aufbaut. Derartige Bereiche weisen besonders geringe Abweichungen zur Sollkontur des Verzahnungsprofils auf.

Eine Weiterbildung der Erfindung sieht vor, dass die Vorschubvorrichtung einen Mitnahmefinger aufweist, der aus einer Ruhestellung in eine Mitnahmestellung bewegbar ist, in der er in Kontakt mit dem Sägewerkzeug tritt, um dieses zu verlagern. Dabei ist die Ruhestellung derart gewählt, dass das Sägewerkzeug relativ zum Mitnahmefinger bewegt werden kann, während in der Mitnahmestellung Mitnahmefinger und Sägewerkzeug nur gemeinsam bewegt werden können. Der Mitnahmefinger kann dabei geometrisch an den Bereich des Sägewerkzeugs angepasst sein, mit welchem er in Kontakt tritt. Dadurch ist gewährleistet, dass die von der Vorschubvorrichtung aufgebrachten Vorschubkräfte mit hoher Genauigkeit in eine Bewegung des Sägewerkzeugs umgesetzt werden.

In diesem Zusammenhang kann erfindungsgemäß ferner vorgesehen sein, dass die Bewegung des Mitnahmefingers in die Mitnahmestellung mittels einer separaten Bewegungsachse erfolgt. Dies ermöglicht, dass die Bewegung des Mitnahmefingers mit einer speziell dafür geeigneten Bewegungsachse präzise angesteuert werden kann. Hierbei kann weiterhin erfindungsgemäß vorgesehen sein, dass der Mitnahmefinger derart ausgebildet ist, dass er quer zur Längsachse des Maschinenbetts in seine Mitnahmestellung bewegbar ist. Eine entsprechende Bewegung des Mitnahmefingers erfolgt auch quer zur Längsachse des Sägewerkzeugs. Somit kann mittels einer einfachen ein-axialen Bewegung ein Kontakt zum Sägewerkzeug mittels des Mitnahmefingers aufgebaut werden. Insbesondere ein Eingriff in das Verzahnungsprofil des Sägewerkzeugs lässt sich mittels einer derartigen Bewegung auf einfache Weise erreichen.

In einer Weiterbildung der Erfindung ist vorgesehen, dass die Vorschubvorrichtung im Wesentlichen in demselben Bereich wie das Rotationswerkzeug am Sägewerkzeug angreift, um dieses zu verlagern. Dies ermöglicht eine besonders kompakt gebaute Einheit aus Bearbeitungskopf und Vorschubvorrichtung. Dabei kann insbesondere vorgesehen sein, dass die Vorschubvorrichtung in einen unmittelbar bearbeiteten Abschnitt des Rotationswerkzeugs eingreift, wodurch eine hohe Genauigkeit bezüglich der Relativposition von Vorschubvorrichtung und Sägewerkzeug erreicht werden kann.

Eine Weiterbildung der Erfindung sieht vor, dass der Bearbeitungskopf eine Schwenkachse zum Verschwenken des Rotationswerkzeuges relativ zum Maschinenbett umfasst. Dies ermöglicht ein variables Ausrichten des Rotationswerkzeugs nach Maßgabe eines vorliegenden Verzahnungsprofils eines Sägwerkzeugs, gegebenenfalls unter zusätzlicher Einstellung einer Neigung, einem sogenannten "Sturz".

Ferner kann erfindungsgemäß vorgesehen sein, dass die Vorschubvorrichtung derart am Bearbeitungskopf angeordnet ist, dass diese gemeinsam mit dem Rotationswerkzeug mittels der Schwenkachse verschwenkbar ist. Dies ermöglicht es, dass die Vorschubvorrichtung und das Rotationswerkzeug stets konstant zueinander ausgerichtet sind. Daher kann bei Ausrichten der Schwenkachse zur Positionierung des Rotationswerkzeugs auch gleichzeitig die Vorschubvorrichtung bevorzugt ausgerichtet werden. Somit kann auf einfache Weise insbesondere ein derartiger Angriff der Vorschubvorrichtung am Sägewerkezug erreicht werden, bei der Vorschubvorrichtung und Rotationswerkzeug im Wesentlichen in demselben Bereich des Sägewerkzeugs angreifen.

In einer Weiterbildung der Erfindung ist vorgesehen, dass die Vorschubvorrichtung mittels einer CNC-Steuerung steuerbar ist. Mittels einer solchen Steuerung können die jeweiligen Achsen der Vorrichtung präzise koordiniert und die auszuführenden Bewegungen in bekannter Weise programmiert oder basierend auf hinterlegten Datensätzen vorgegeben werden.

Ferner kann erfindungsgemäß vorgesehen sein, dass die Schwenkachse derart angeordnet ist, dass sie das Rotationswerkzeug um eine horizontale Raumachse verschwenkt, die im Wesentlichen rechtwinklig zur Längsachse des Maschinenbetts angeordnet ist. Dies ermöglicht einen einfachen Aufbau der Vorrichtung sowie ein zumindest mittelbares Abstützen des Bearbeitungskopfes am Maschinenbett, wodurch die Steifigkeit der Vorrichtung verbessert wird.

Die Erfindung betrifft ebenso ein Verfahren gemäß Anspruch 15 zum Schärfbearbeiten von langgestreckten Sägewerkzeugen mit einer Vorrichtung gemäß den vorstehend beschriebenen Varianten, wobei das Verfahren die folgenden Schritte umfasst:
a) Vorgeben der von der Schwenkachse und Hubachse auszuführenden Bewegungen in Abhängigkeit eines zu bearbeitenden Sägewerkzeugs;
b) Vorgeben der von der linearen Bewegungsachse auszuführenden Bewegung in Abhängigkeit einer zurückzulegenden, eine Mehrzahl von Zähnen umfassenden Bearbeitungslänge;
c) Bearbeiten des Sägewerkzeugs entlang der Bearbeitungslänge;
d) Zurückbewegen des Bearbeitungskopfes um die Strecke der zurückgelegten Bearbeitungslänge mittels der linearen Bewegungsachse;
e) Verlagern des Sägewerkzeugs längs des Maschinenbetts um die Strecke der Bearbeitungslänge mittels der Vorschubvorrichtung.

Das Vorgeben der Achsbewegungen in den Schritten a) und b) kann insbesondere durch Hinterlegen entsprechender Datensätze oder Programmbefehle in einer CNC-Steuerung der Vorrichtung erfolgen. Insbesondere kann aber die Schwenkachse auf einen festen Wert eingestellt werden und das Führen des Rotationswerkzeugs entlang des Verzahnungsprofils des Sägewerkzeugs über koordinierte Bewegungen von Hubachse und linearer Bewegungsachse erfolgen. Dabei kann die Schwenkachse entsprechend des Spanwinkels des Verzahnungsprofils des zu bearbeitenden Sägewerkzeugs eingestellt werden.

Es versteht sich, dass die Schritte d) und e) auch zeitlich überlappend oder parallel ausgeführt werden können, insbesondere bei einer Vorrichtung, bei der die Vorschubvorrichtung erfindungsgemäß am Bearbeitungskopf angeordnet ist. Dabei wird das Rotationswerkzeug beispielsweise mittels der Hubachse aus dem Verzahnungsprofil des Sägewerkzeugs ausgefahren und die Vorschubvorrichtung tritt mit dem Sägewerkzeug in Kontakt. Anschließend werden der Bearbeitungskopf und die Vorschubvorrichtung mittels der linearen Bewegungsachse gemeinsam um die Strecke der Bearbeitungslänge in eine Ausgangsstellung verlagert.

Bei dem erfindungsgemäßen Verfahren kann auch weiterhin vorgesehen sein, dass die Schritte a) bis e) zumindest so oft wiederholt werden, bis ein jeder Zahn des Sägewerkzeugs einmal bearbeitet wurde. Dabei ist es gemäß einer Weiterbildung des erfindungsgemäßen Verfahrens vorteilhaft, wenn bei der Wiederholung der Verfahrensschritte die Schritte a) und b) nur erneut ausgeführt werden, wenn die auszuführenden Achsbewegungen sich gegenüber denen des vorigen Durchlaufes unterscheiden. Ein derartiges Bearbeitungsverfahren ermöglicht ein zeitoptimiertes Bearbeiten des Sägewerkzeugs. Hierbei kann die vorbestimmte Bearbeitungslänge so groß wie möglich gewählt werden, um das Sägewerkzeug mit möglichst wenigen Vorschubvorgängen zu bearbeiten. Weiterhin kann es notwendig sein, die Bearbeitungslänge bei einem mehrfachen Durchlaufen der vorstehend beschriebenen Verfahrensschritte a) - e) entsprechend eines Restbetrages aus dem Quotienten aus der Gesamtanzahl der Zähne des Sägewerkzeugs und der pro Bearbeitungsvorgang maximal bearbeitbarer Anzahl von Zähnen bei einem der Durchläufe anzupassen.

Die Erfindung wird im Folgenden beispielhaft anhand der beiliegenden Figuren erläutert. Es stellen dar:
- Fig. 1: eine perspektivische Ansicht einer Ausführungsform der erfindungsgemäßen Vorrichtung in teilweise aufgebrochener Darstellung;
- Fig. 2: eine Detailansicht des Bearbeitungskopfes der erfindungsgemäßen Vorrichtung aus Fig. 1, wobei die Vorschubvorrichtung eine Ruhestellung einnimmt, in der sie nicht am Sägewerkzeug angreift; und
- Fig. 3: eine Detailansicht analog zu Fig. 2, wobei die Vorschubvorrichtung eine Mitnahmestellung einnimmt, in der sie in das Verzahnungsprofil des Sägewerkzeugs eingreift.

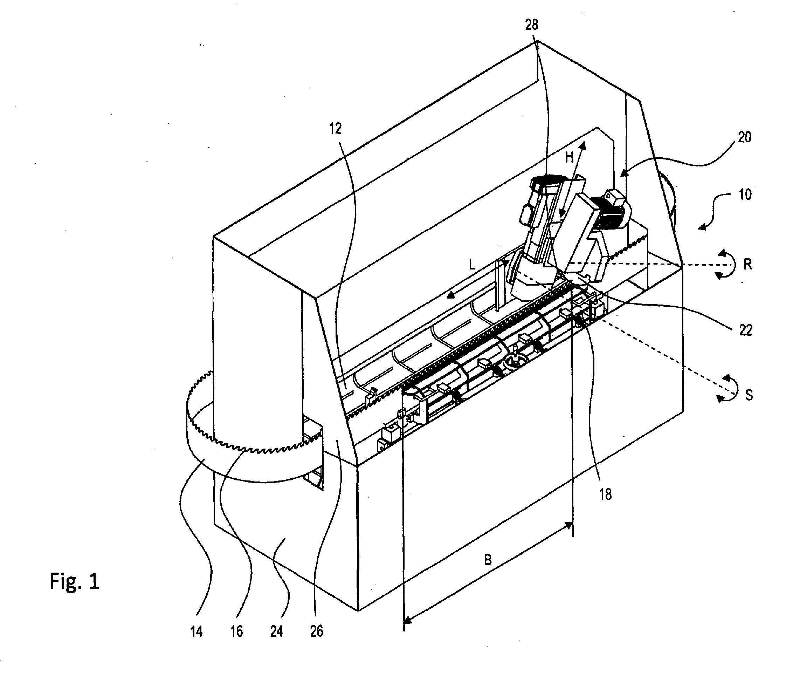

In Fig. 1 ist eine erfindungsgemäße Vorrichtung gezeigt und allgemein mit 10 bezeichnet. Die Vorrichtung 10 weist eine Basis mit einem langgestreckten Maschinenbett 12 auf. Ein sich im Wesentlichen längs dieses Maschinenbetts erstreckendes Sägewerkzeug 14 in Form eines endlosen Bandsägeblatts weist an seiner in Fig. 1 oberen umlaufenden Kante ein Verzahnungsprofil 16 auf. Das Bandsägeblatt 14 ist allgemein als geschlossener Körper geformt, der je nach eingeleiteten Spannungen ovale Formen annimmt. Innerhalb der in Fig. 1 gezeigten Vorrichtung ist das Bandsägeblatt im Wesentlichen als langgestrecktes Oval geformt und umfasst auch sich gegenüberliegende, parallel verlaufende Abschnitte. Somit weist das Bandsägeblatt 14 eine ausgeprägte Längsachse auf, die parallel zur Längsachse des Maschinenbetts 12 verläuft. Das Sägewerkzeug 14 ist weiterhin mittels einer Fixierrichtung 18 relativ zum Maschinenbett 12 fixiert.

Die Vorrichtung 10 weist weiterhin einen Bearbeitungskopf 20 auf. Dieser umfasst eine Rotationsachse R, die vorgesehen ist, um ein Rotationswerkzeug 22 anzutreiben, in diesem Fall eine Schleifscheibe. Die Rotationsachse R und das Rotationswerkzeug 22 sind derart an einer Hubachse H angeordnet, dass das Rotationswerkzeug 22 relativ zum Maschinenbett 12 höhenverstellbar ist. Die Hubachse H ist wiederum mittels einer Schwenkachse S relativ zum Maschinenbett 12 verschwenkbar. Die Schwenkachse S ist an einer linearen Bewegungsachse L angeordnet, mittels welcher der Bearbeitungskopf 20 längs des Maschinenbetts 12 verlagerbar ist.

Der Arbeitsraum der Vorrichtung 10 ist von einem Maschinengehäuse 24 umgeben, welches einen öffnungsfähigen Abschnitt 26 aufweist. Dieser Abschnitt 26 ist in an sich bekannter Weise relativ zum Maschinengehäuse 24 verschwenkbar oder klappbar, so dass insbesondere Bandsägeblätter von in Fig. 1 oberhalb der Vorrichtung 10 in den Arbeitsraum einführbar sind. In Fig. 1 ist das Maschinengehäuse 24 und dessen öffnungsfähiger Abschnitt 26 teilweise durchbrochen dargestellt, um die übrigen Komponenten der Vorrichtung besser erkennen zu können.

Außerhalb des Maschinenraums der Vorrichtung 10 wird das Sägewerkzeug 14 durch nicht dargestellte, an sich bekannte Stützvorrichtungen gehalten und geführt, insbesondere im nicht gezeigten hinteren Teil der Vorrichtung 10.

In Fig. 1 ist die für den vorliegenden Bearbeitungsvorgang vorgegebene Bearbeitungslänge mit einem Doppelpfeil B markiert. Das in Fig. 1 linke Ende des Pfeils B stellt die Ausgangsstellung des Bearbeitungskopfes 20 dar. Demnach befindet sich der Bearbeitungskopf 20 in Fig.1 in seiner maximal ausgelenkten Stellung. Während des Bearbeitens des Verzahnungsprofils 16 wird der Bearbeitungskopf 20 von seiner Ausgangsstellung mittels der linearen Bewegungsachse L in Richtung der maximal ausgelenkten Stellung verlagert. Dabei wird die Höhe des Rotationswerkzeugs 22 relativ zum Maschinenbett 12 mittels der Hubachse H in Koordination mit der Bewegung der linearen Bewegungsachse L gesteuert. Die Einstellung der Schwenkachse S wird zu Beginn der Bearbeitung in Abhängigkeit des Spanwinkels des vorliegenden Verzahnungsprofils 16 eingestellt und beim Bearbeiten nicht variiert. Somit wird das Rotationswerkzeug 22 in an sich bekannter Weise entlang der Kontur des Verzahnungsprofils 16 geführt.

Wie man in Fig. 1 weiterhin erkennt, erstreckt sich der Bereich der Bearbeitungslänge B nur entlang eines Teilbereiches des Sägewerkzeugs 14. Demnach muss das Sägewerkzeug 14 abschnittsweise relativ zum Maschinenbett 12 verlagert werden, um entlang seines gesamten Verzahnungsprofils 16 bearbeitet werden zu können. Hierzu ist eine Vorschubvorrichtung 28 vorgesehen, die am Bearbeitungskopf 20 angeordnet ist und gemeinsam mit diesem mittels der Schwenkachse S und der linearen Bewegungsachse L verlagerbar ist.

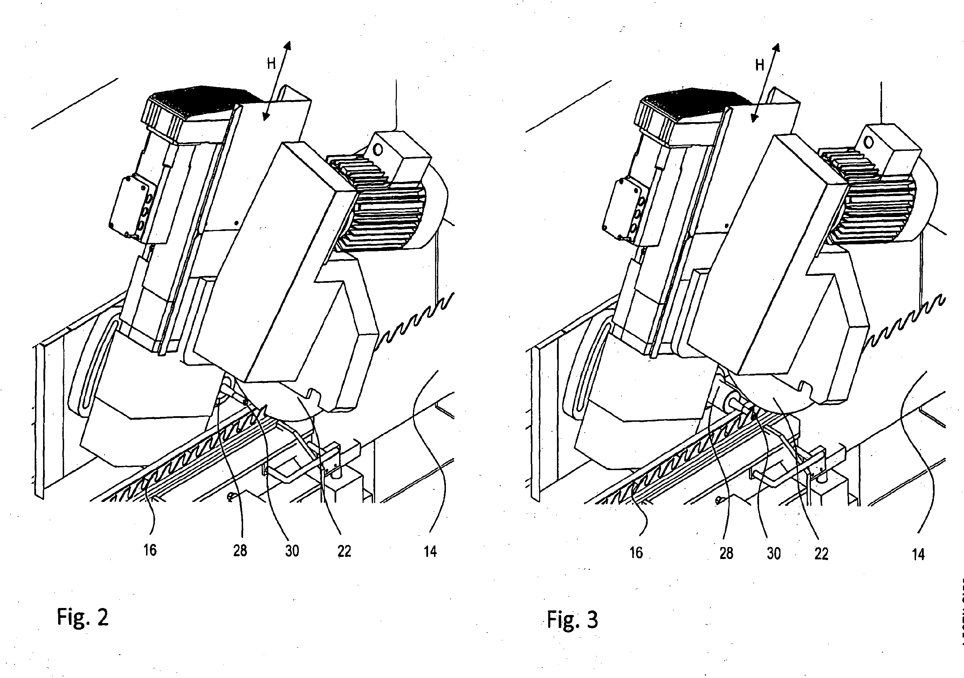

Wie in Fig. 2 vergrößert dargestellt, umfasst die Vorschubvorrichtung 28 einen Mitnahmefinger 30. Dieser ist über eine separate Bewegungsachse der Vorschubvorrichtung 28 quer zur Längsrichtung des Sägewerkzeugs 14 bzw. quer zum Maschinenbett 12 aus seiner in Fig. 2 gezeigten Ruhestellung in Richtung des Sägewerkzeugs 14 in eine Mitnahmestellung verlagerbar. Wie in Fig. 3 gezeigt, greift der Mitnahmefinger 30 in seiner Mitnahmestellung in das Verzahnungsprofil 16 des Sägewerkzeugs 14 ein, genauer gesagt in eine Zahnlücke des Verzahnungsprofils 16. Somit stellt sich beim Verlagern der Vorschubvorrichtung 28 mittels der linearen Bewegungsachse L ein Formschluss zwischen der Vorschubvorrichtung 28 und Sägewerkzeug 14 ein, so dass diese gemeinsam längs des Maschinenbetts 12 verlagerbar sind.

Weiterhin erkennt man aus den Figuren 2 und 3 in Zusammenschau, dass die Vorschubvorrichtung 30 derart am Bearbeitungskopf 20 angeordnet ist, dass sich deren Mitnahmefinger 30 und das Rotationswerkzeug 22 im Wesentlichen in einer gemeinsamen Raumebene befinden. Entsprechend greift der Mitnahmefinger 30 in dem vom Rotationswerkzeug 22 unmittelbar bearbeiteten Bereich des Verzahnungsprofils 16 ein. Im gezeigten Fall bearbeitet das Rotationswerkzeug 22 eine von der Ausgangstellung des Rotationswerkzeugs 22 betrachtete letzte, sich innerhalb des Bereichs der Bearbeitungslänge B befindende Zahnbrust des Verzahnungsprofils 16. Anschließend wird das Rotationswerkzeug 22 mittels der Hubachse H aus dem Verzahnungsprofil 16 ausgefahren und der Mitnahmefinger 30 wird in seine Mitnahmestellung bewegt. In dieser Mitnahmestellung ist der Mitnahmefinger 30 in einem geringfügigen, vorbestimmten Abstand zu der zuletzt bearbeiteten Zahnbrust des Verzahnungsprofils 16 angeordnet. Somit tritt der Mitnahmefinger bei Bewegen der linearen Bewegungsachse L unmittelbar in einen formschlüssigen Kontakt zum Sägewerkzeug 14.

Im Folgenden wird bezugnehmend auf die vorstehend beschriebenen Figuren eine bevorzugte Variante des erfindungsgemäßen Verfahrens zum Bearbeiten eines Sägewerkzeugs mit der erfindungsgemäßen Vorrichtung erläutert.

Zunächst wird das Sägewerkzeug 14 in bekannter Weise von in Fig. 1 oben in einer kombinierten vertikalen und schwenkenden Bewegung auf dem Maschinenbett 12 positioniert. Dabei wird das Sägewerkzeug 14 relativ zum Bearbeitungskopf 20 in einer vorbestimmten Position ausgerichtet und mittels der Fixiervorrichtung 16 fixiert. Durch Eingabe von Datensätzen in eine CNC-Steuerung der Vorrichtung (nicht dargestellt) werden die auszuführenden Achsbewegungen der Vorrichtung 10 vorgegeben. Nach Schließen des öffnungsfähigen Gehäuseteils 26 wird der Bearbeitungskopf 20 mittels der Schwenkachse 26 relativ zum Maschinenbett 12 verschwenkt, so dass das Rotationswerkzeug 22 nach Maßgabe des Spanwinkels des Sägewerkzeugs 14 unter Berücksichtigung einer zusätzlichen Neigung, dem sogenannten "Sturz", ausgerichtet ist. Das Rotationswerkzeug 22 wird mittels der Rotationsachse R angetrieben und mittels der Hubachse H in das Verzahnungsprofil 16 des Sägewerkzeugs 14 eingeführt. Anschließend wird das Rotationswerkzeug 22 entlang des Verzahnungsprofils 16 durch eine kombinierte Bewegung der linearen Bewegungsachse L und der Hubachse H um die Strecke der Bearbeitungslänge B bewegt, wobei jeder Zahn oder ausgewählte Zähne, die innerhalb der Bearbeitungslänge B liegen, nacheinander schärfbearbeitet werden. Das Sägewerkzeug 14 bleibt dabei dauerhaft fixiert.

Beim Erreichen der maximal ausgelenkten Stellung des Bearbeitungskopfes 20, also dem in Fig. 1 rechten Ende der Bearbeitungslänge B, wird das Rotationswerkzeug 22 mittels der Hubachse H aus dem Verzahnungsprofil 16 des Sägewerkzeugs 14 heraus bewegt. Daraufhin wird, wie vorstehend beschrieben, der Mitnahmefinger 30 der Vorschubvorrichtung 28 in seine Mitnahmestellung verlagert. Die Fixiervorrichtung 18 wird gelöst und der Bearbeitungskopf 20 wird mittels der linearen Bewegungsachse L in seine Ausgangsstellung am in Fig. 1 linken Ende der Bearbeitungslänge B bewegt. Gleichzeitig wird das Sägewerkzeug 14 aufgrund des darin eingreifenden Mitnahmefingers 30 gemeinsam mit dem Bearbeitungskopf 20 relativ zum Maschinenbett 12 verlagert. Nach erfolgter Verlagerung wird das Sägewerkzeug 14 mit der Fixiervorrichtung 18 erneut fixiert und der Mitnahmefinger 30 wird in seine Ruhestellung versetzt. Anschließend erfolgt das Bearbeiten des Sägewerkzeugs 14 entlang der Bearbeitungslänge B zahnweise analog zum vorigen Durchlauf.

Es gilt anzumerken, dass das Bearbeiten eines Sägwerkzeugs mittels der gezeigten Vorrichtung 10 auch durch Bewegen des Bearbeitungskopfes 20 in entgegengesetzter Richtung erfolgen kann, also vom in Fig. 1 rechten zum in Fig. 1 linken Ende der Bearbeitungslänge B. In diesem Fall befände sich die Ausgangstellung des Bearbeitungskopfes 20 am in Fig. 1 rechten Ende. Analog zur vorstehend beschriebenen Weise würde der Bearbeitungskopf 20 mittels der Hubachse H in das Verzahnungsprofil eines fixierten Sägewerkzeugs eingeführt werden und anschließend mittels der linearen Bewegungsachse L um die Strecke der Bearbeitungslänge B bewegt werden, in diesem Fall allerdings zum linken Ende der Bearbeitungslänge B. Dort würde dann die Vorschubeinrichtung mit dem Sägewerkzeug in Eingriff gebracht werden, um das Sägewerkzeug und den Bearbeitungskopf 20 gemeinsam mittels in der linearen Bewegungsachse L zum in Fig. 1 rechten Ende der Bearbeitungslänge B zu bewegen. Die Festlegung auf eine dieser alternativen Bearbeitungsabfolgen bzw. -richtungen erfolgt allgemein nach Maßgabe eines vorliegenden Sägewerkzeugs und dessen vorhandenes oder zu erzeugendes Verzahnungsprofil.

Die vorstehend beschriebenen Verfahrensschritte werden zumindest so oft wiederholt, bis das Sägewerkzeug 14 an jedem Zahn oder an bestimmten ausgewählten Zähnen bearbeitet wurde. Das Vorgeben der Bearbeitungslänge B erfolgt dabei derart, dass die Anzahl der Durchläufe der einzelnen Verfahrensschritte minimiert wird. Entsprechend weist die Bearbeitungslänge B einen möglichst großen Wert auf, dessen Maximallänge durch die Maschinenstruktur vorgesehen ist. Umfasst das Sägewerkzeug eine Anzahl von Zähnen, die nicht einem ganzzahligen Vielfachen der von der Bearbeitungslänge B eingeschlossenen Anzahl von Zähnen entspricht, so wird bei einem der für das Bearbeiten notwendigen Durchläufe der vorstehend beschriebenen Verfahrensschritte die Bearbeitungslänge B entsprechend der verbleibenden Restanzahl an Zähnen angepasst.

## Patentansprüche

1. Vorrichtung (10) zum Schärfbearbeiten von langgestreckten Sägewerkzeugen (14) umfassend
- eine Basis, welche ein langgestrecktes Maschinenbett (12) aufweist;
- eine Fixiervorrichtung (18), die dazu ausgebildet ist, das zu bearbeitende Sägewerkzeug (14) relativ zum Maschinenbett (12) zu fixieren;
- einen Bearbeitungskopf (20) mit einer Rotationsachse (R) zum Antreiben eines Rotationswerkzeuges (22) und einer Hubachse (H) zum Höhenverstellen des Rotationswerkzeuges (22) relativ zum Maschinenbett (12); **dadurch gekennzeichnet dass**
der Bearbeitungskopf (20) mittels einer linearen Bewegungsachse (L) längs des Maschinenbetts (12) derart verlagerbar ist, dass ein fixiertes Sägewerkzeug (14) entlang einer vorbestimmten, eine Mehrzahl von Zähnen umfassenden Bearbeitungslänge (B) bearbeitbar ist, und
eine Vorschubvorrichtung (28) vorgesehen ist, die dazu ausgebildet ist, das Sägewerkzeug (14) wahlweise um die Strecke eines einzelnen Zahns bzw. einer Zahnteilung oder um die Strecke der vorbestimmten, eine Mehrzahl von Zähnen umfassenden Bearbeitungslänge (B) längs des Maschinenbetts (12) zu verlagern.

2. Vorrichtung (10) nach Anspruch 1,
**dadurch gekennzeichnet, dass** die Vorschubvorrichtung (28) längs des Maschinenbetts (12) wahlweise um die Strecke eines einzelnen Zahns oder um die Strecke der vorbestimmten, eine Mehrzahl von Zähnen umfassenden Bearbeitungslänge (B) verlagerbar ist.

3. Vorrichtung (10) nach Anspruch nach Anspruch 2,
**dadurch gekennzeichnet, dass** die Vorschubvorrichtung (28) mittels einer separat vorgesehen Bewegungsachse längs des Maschinenbetts (12) verlagerbar ist.

4. Vorrichtung (10) nach Anspruch 2,
**dadurch gekennzeichnet, dass** die Vorschubvorrichtung (28) am Bearbeitungskopf (20) angeordnet ist, so dass sie gemeinsam mit diesem mittels der linearen Bewegungsachse (L) verlagerbar ist.

5. Vorrichtung (10) nach einem der vorangehenden Ansprüche ,
**dadurch gekennzeichnet, dass** die Vorschubvorrichtung (28) unter Reibschluss am Sägewerkzeug (14) angreift, um dieses zu verlagern.

6. Vorrichtung (10) nach einem Ansprüche 1 bis 4,
**dadurch gekennzeichnet, dass** die Vorschubvorrichtung (28) unter Formschluss am Sägewerkzeug (14) angreift, um dieses zu verlagern.

7. Vorrichtung (10) nach Anspruch 5 oder 6,
**dadurch gekennzeichnet, dass** die Vorschubvorrichtung (28) einen Mitnahmefinger (30) aufweist, der aus einer Ruhestellung in eine Mitnahmestellung bewegbar ist, in der er in Kontakt mit dem Sägewerkzeug (14) tritt, um dieses zu verlagern.

8. Vorrichtung (10) nach Anspruch 7,
**dadurch gekennzeichnet, dass** die Bewegung des Mitnahmefingers (30) in die Mitnahmestellung mittels einer separaten Bewegungsachse erfolgt.

9. Vorrichtung (10) nach einem der Ansprüche 7 oder 8,
**dadurch gekennzeichnet, dass** Mitnahmefinger (30) derart ausgebildet ist, dass er quer zur Längsachse des Maschinenbetts (12) in seine Mitnahmestellung bewegbar ist.

10. Vorrichtung (10) nach einem der vorangehenden Ansprüche,
**dadurch gekennzeichnet, dass** die Vorschubvorrichtung (28) im Wesentlichen in demselben Bereich wie das Rotationswerkzeug (22) am Sägewerkzeug (14) angreift, um dieses zu verlagern.

11. Vorrichtung (10) nach einem der vorangehenden Ansprüche,
**dadurch gekennzeichnet, dass** der Bearbeitungskopf (20) eine Schwenkachse (S) zum Verschwenken des Rotationswerkzeuges (22) relativ zum Maschinenbett (12) umfasst.

12. Vorrichtung (10) nach Anspruch 11,
**dadurch gekennzeichnet, dass** die Vorschubvorrichtung (28) derart am Bearbeitungskopf (20) angeordnet ist, dass diese gemeinsam mit dem Rotationswerkzeug (22) mittels der Schwenkachse (S) verschwenkbar ist.

13. Vorrichtung (10) nach Anspruch 11 oder 12,
**dadurch gekennzeichnet, dass** die Schwenkachse (S) derart angeordnet ist, dass sie das Rotationswerkzeug (R) um eine horizontale Raumachse verschwenkt, die im Wesentlichen rechtwinklig zur Längsachse des Maschinenbetts (12) angeordnet ist.

14. Vorrichtung (10) nach einem der vorangehenden Ansprüche,
**dadurch gekennzeichnet, dass** die Vorschubvorrichtung (28) mittels einer CNC-Steuerung steuerbar ist.

15. Verfahren zum Schärfbearbeiten von langgestreckten Sägewerkzeugen mit einer Vorrichtung (10) nach einem der vorangehenden Ansprüche, **gekennzeichnet durch** die Schritte:
a) Vorgeben der von der Schwenkachse (S) und Hubachse (H) auszuführenden Bewegungen in Abhängigkeit eines zu bearbeitenden Sägewerkzeugs (14);
b) Vorgeben der von der linearen Bewegungsachse (L) auszuführenden Bewegung in Abhängigkeit einer zurückzulegenden, eine Mehrzahl von Zähnen umfassenden Bearbeitungslänge (B);
c) Bearbeiten des Sägewerkzeugs (14) entlang der Bearbeitungslänge (B);
d) Zurückbewegen des Bearbeitungskopfes (20) um die Strecke der zurückgelegten Bearbeitungslänge (B) mittels der linearen Bewegungsachse (L);
e) Verlagern des Sägewerkzeugs (14) längs des Maschinenbetts (12) um die Strecke der Bearbeitungslänge (B) mittels der Vorschubvorrichtung (28).

16. Verfahren nach Anspruch 15,
**dadurch gekennzeichnet, dass** die Schritte a) bis e) zumindest so oft wiederholt werden, bis ein jeder Zahn des Sägewerkzeugs (14) einmal bearbeitet wurde.

17. Verfahren nach Anspruch 16,
wobei bei der Wiederholung der Verfahrensschritte die Schritte a) und b) nur erneut ausgeführt werden, wenn die auszuführenden Achsbewegungen sich gegenüber denen des vorigen Durchlaufes unterscheiden.

## Claims

1. A device (10) for sharpening of elongated saw tools (14), comprising
- a base which comprises an elongated machine bed (12);
- a fixing device which is adapted to fix the saw tool (14) to be machined relative to the machine bed (12);
- a machining head (20) with an axis of rotation (R) for driving a rotating tool (22) and a lift axle (H) for height adjustment of the rotating tool (22) relative to the machine bed (12);
**characterised in that**
the machining head (20) may by shifted along the machine bed (12) by means of a linear movement axle (L) in such a manner that a fixed saw tool (14) may be machined along a predetermined machining length (B) which comprises a plurality of teeth, and
a feed device (28) is provided which is adapted to optionally shift the saw tool (14) along the machine bed (12) by the distance of a single tooth or a tooth pitch, respectively, or by the distance of a predetermined machining length (B) which comprises a plurality of teeth.

2. The device (10) according to Claim 1,
**characterised in that** the feed device (28) may be optionally shifted along the machine bed (12) by the distance of a single tooth or by the distance of the predetermined machining length (B) which comprises a plurality of teeth.

3. The device (10) according to Claim 2,
**characterised in that** the feed device (28) may be shifted along the machine bed (12) by means of a separately provided movement axle (L).

4. The device (10) according to Claim 4,
**characterised in that** the feed device (28) is arranged at the machining head (20) so that it may be shifted together with same by means of the linear movement axle (L).

5. The device (10) according to one of the previous claims,
**characterised in that** the feed device (28) acts on the saw tool (14) under frictional connection in order to shift it.

6. The device (10) according to one of Claims 1 to 4,
**characterised in that** the feed device (28) acts on the saw tool (14) under positive locking in order to shift it.

7. The device (10) according to Claim 5 or 6,
**characterised in that** the feed device (28) comprises a driving finger (30) which is movable from a rest position into a driving position in which it comes into contact with the saw tool (14) in order to shift it.

8. The device (10) according to Claim 7,
**characterised in that** the movement of the driving finger (30) into the driving position is effected by means of a separate movement axle.

9. The device (10) according to one of Claims 7 or 8,
**characterised in that** the driving finger (30) is adapted in such a manner that it is movable into its driving position transversely to the longitudinal axis of the machine bed (12).

10. The device (10) according to one of the previous claims,
**characterised in that** the feed device (28) acts essentially on the same area of the saw tool as the rotary tool (22) in order to shift the saw tool.

11. The device (10) according to one of the previous claims,
**characterised in that** the machining head (20) comprises a pivot axle (S) for pivoting the rotary tool (22) relative to the machine bed (12).

12. The device (10) according to Claim 11,
**characterised in that** the feed device (28) is arranged at the machining head (20) in such a manner that it may be pivoted together with the rotary tool (22) by means of the pivot axle (S).

13. The device (10) according to Claim 11 or 12,
**characterised in that** the pivot axle (S) is arranged in such a manner that it pivots the rotary tool (22) about a horizontal spatial axis which is arranged essentially orthogonally to the longitudinal axis of the machine bed (12).

14. The device (10) according to one of the previous claims,
**characterised in that** the feed device (28) may be controlled by means of a CNC controller.

15. A method for sharpening of elongated saw tools (14) with a device (10) according to one of the previous claims, **characterised by** the steps:
a) Specifying the movements to be performed by the pivot axle (S) and the lift axle (H) depending on a saw tool (14) to be machined;
b) specifying the movements to be performed by the linear movement axle (L) depending on a machining length (B) to be covered which comprises a plurality of teeth;
c) machining of the saw tool (14) along the machining length (B);
d) returning of the machining head (20) by the distance of the covered machining length (B) by means of the linear movement axle (L);
e) shifting of the saw tool (14) along the machine bed (12) by the distance of the machining length (B) by means of the feed device (28).

16. The method according to Claim 15,
**characterised in that** steps a) to e) are repeated at least as often until each tooth of the saw tool (14) was machined once.

17. The method according to Claim 16,
wherein steps a) and b) are only performed again in the repetition of the method steps if the movements of the axles differ from those of the previous cycle.

## Revendications

1. Dispositif (10) d'usinage par aiguisement d'outils de sciage (14) de forme allongée, comprenant
- une base qui présente un banc de machine (12) de forme allongée ;
- un dispositif de fixation (18) qui est conçu pour fixer l'outil de sciage (14) à usiner par rapport audit banc de machine (12) ;
- une tête d'usinage (20) pourvue d'un axe de rotation (R) pour entraîner un outil rotatif (22) et d'un axe de translation (H) pour régler en hauteur ledit outil rotatif (22) par rapport au banc de machine (12) ; **caractérisé en ce que**
ladite tête d'usinage (20) peut être déplacée le long du banc de machine (12) à l'aide d'un axe de déplacement (L) linéaire de telle sorte qu'un outil de sciage (14) fixé peut être usiné le long d'une longueur d'usinage (B) prédéfinie comprenant plusieurs dents, et
**en ce qu'**est prévu un dispositif d'avancement (28) qui est conçu pour déplacer l'outil de sciage (14) le long du banc de machine (12) au choix sur la longueur d'une seule dent ou d'un pas de dent ou sur ladite longueur d'usinage (B) comprenant plusieurs dents.

2. Dispositif (10) selon la revendication 1,
**caractérisé en ce que** ledit dispositif d'avancement (28) peut être déplacé le long du banc de machine (12) au choix sur la longueur d'une seule dent ou sur la longueur d'usinage (B) prédéfinie comprenant plusieurs dents.

3. Dispositif (10) selon la revendication 2,
**caractérisé en ce que** le dispositif d'avancement (28) peut être déplacé le long du banc de machine (12) à l'aide d'un axe de déplacement prévu séparément.

4. Dispositif (10) selon la revendication 2,
**caractérisé en ce que** le dispositif d'avancement (28) est disposé sur la tête d'usinage (20) de manière à pouvoir être déplacé conjointement avec celle-ci à l'aide dudit axe de déplacement (L) linéaire.

5. Dispositif (10) selon l'une des revendications précédentes,
**caractérisé en ce que** le dispositif d'avancement (28) vient en prise par liaison de friction avec l'outil de sciage (14) afin de déplacer celui-ci.

6. Dispositif (10) selon l'une des revendications 1 à 4,
**caractérisé en ce que** le dispositif d'avancement (28) vient en prise par liaison à complémentarité de forme avec l'outil de sciage (14) afin de déplacer celui-ci.

7. Dispositif (10) selon la revendication 5 ou 6,
**caractérisé en ce que** le dispositif d'avancement (28) présente un doigt d'entraînement (30) qui peut être déplacé pour passer d'une position de repos à une position d'entraînement dans laquelle il vient en contact avec l'outil de sciage (14) afin de déplacer celui-ci.

8. Dispositif (10) selon la revendication 7,
**caractérisé en ce que** le mouvement de passage à la position d'entraînement du doigt d'entraînement (30) s'effectue à l'aide d'un axe de déplacement séparé.

9. Dispositif (10) selon l'une des revendications 7 à 8,
**caractérisé en ce que** le doigt d'entraînement (30) est conçu de telle sorte qu'il peut être déplacé perpendiculairement à l'axe du banc de machine (12) pour passer à sa position d'entraînement.

10. Dispositif (10) selon l'une des revendications précédentes,
**caractérisé en ce que** le dispositif d'avancement (28) vient sensiblement dans la même zone que l'outil rotatif (22) en prise avec l'outil de sciage (14) afin de déplacer ce dernier.

11. Dispositif (10) selon l'une des revendications précédentes,
**caractérisé en ce que** la tête d'usinage (20) comprend un axe de pivotement (S) pour faire pivoter l'outil rotatif (22) par rapport au banc de machine (12).

12. Dispositif (10) selon la revendication 11,
**caractérisé en ce que** le dispositif d'avancement (28) est disposé de telle sorte sur la tête d'usinage (20) que celui-ci peut pivoter conjointement avec l'outil rotatif (22) à l'aide de l'axe de pivotement (S).

13. Dispositif (10) selon la revendication 11 ou 12,
**caractérisé en ce que** l'axe de pivotement (S) est disposé de telle sorte qu'il fait pivoter l'outil rotatif (R) autour d'un axe spatial horizontal disposé sensiblement perpendiculairement à l'axe longitudinal du lit de machine (12).

14. Dispositif (10) selon l'une des revendications précédentes,
**caractérisé en ce que** le dispositif d'avancement (28) peut être commandé au moyen d'une commande CNC.

15. Procédé d'usinage par aiguisement d'outils de sciage de forme allongée à l'aide d'un dispositif (10) selon l'une des revendications précédentes, **caractérisé par** les étapes suivantes :
a) la définition des mouvements à effectuer par l'axe de pivotement (S) et par l'axe de translation (H) en fonction d'un outil de sciage (14) à usiner ;
b) la définition du mouvement à effectuer par l'axe de déplacement (L) linéaire en fonction d'une longueur d'usinage (B) à parcourir et comprenant plusieurs dents ;
c) l'usinage de l'outil de sciage (14) le long de la longueur d'usinage (B) ;
d) le déplacement de retour de la tête d'usinage (20) sur la longueur d'usinage (B) parcourue à l'aide de l'axe de déplacement (L) linéaire ;
e) le déplacement de l'outil de sciage (14) le long du banc de machine (12) sur la longueur d'usinage (B) au moyen du dispositif d'avancement (28).

16. Dispositif (10) selon la revendication 15,
**caractérisé en ce que** les étapes a) à e) sont répétées au moins autant de fois qu'il le faut pour que chacune des dents de l'outil de sciage (14) ait subi une passe d'usinage.

17. Dispositif (10) selon la revendication 16,
les étapes a) et b) n'étant répétées que si les mouvements axiaux à effectuer diffèrent de ceux de la passe précédente.
